# NEW EUROPEAN PATENT SPECIFICATION

(11) **EP 1 648 133 B2**
(45) Date of publication and mention of the opposition decision: **20.06.2012**
(45) Mention of the grant of the patent: 26.08.2009
(21) Application number: 04738346.8
(22) Date of filing: 05.07.2004
(51) Int. Cl.: H04L 12/46, H04L 12/56

(54) **A method for encapsulating data stream**
Verfahren zum Einkapseln eines Datenstroms
Procédé d'encapsulation d'un flot de données

(30) Priority: 17.07.2003 CN 03149588
(43) Date of publication of application: 19.04.2006
(73) Proprietor: Huawei Technologies Co., Ltd., Shenzhen, Guangdong Province 518129 (CN)
(72) Inventor: LIAO, Jingling Huawei Adminstration Building, Shenzhen Guangdong 518129 (CN); SHI, Lei Huawei Adminstration Building, Shenzhen Guangdong 518129 (CN); WANG, Hongxia Huawei Adminstration Building, Shenzhen Guangdong 518129 (CN); ZENG, Li Huawei Adminstration Building, Shenzhen Guangdong 518129 (US)
(74) Representative: Körber, Martin Hans
(86) International application number: PCT/CN2004/000748
(87) International publication number: WO 2005/008990

(56) References cited:
- EP-A1- 1 199 827
- CN-A- 1 286 846
- JP-A- 8 205 146
- JP-A- 11 136 134
- JP-B2- 3 008 893
- US-A- 5 664 116
- US-A1- 2003 026 267
- ITU-T G.7041/Y.1303: "Generic framing procedure (GFP), SERIES G: TRANSMISSION SYSTEMS AND MEDIA, DIGITAL SYSTEMS AND NETWORKS, SERIES Y: GLOBAL INFORMATION INFRASTRUCTURE AND INTERNET PROTOCOL ASPECTS Internet protocol aspects ? Transport" ITU-T, December 2001 (2001-12), pages 1-52, XP002386377 ITU
- LAUBACH M.: 'RFC1577: Classical IP and ARP over ATM' IETF, [Online] January 1994, INET, pages 1 - 17 Retrieved from the Internet: <URL:ftp://ftp.isi.edu/in-notes/rfc1577.txt >

## Description

### Field of the Technology

The present invention relates to data communication technology, especially to a method for encapsulating data streams.

### Background of the Invention

With the abroad application of Multi Service Transfer Platform (MSTP), manifold encapsulating modes are emerging, such as Link Access Procedure-SDH (LAPS) protocol, High-level Data Link Control (HLDC), Point-to-Point Protocol (PPP), etc. Manifold services can be encapsulated by utilizing these encapsulating modes, and accordingly the encapsulated services can be transferred. The current standards suggest that one encapsulating mode is used for a certain protocol such as Gigabit Ethernet (GE) and Internet Protocol (IP), or a certain kind of protocols such as coding service protocol at 8B/10B.

At present Generic Framing Procedure (GFP) is one of the most popular encapsulating modes, in which a general mechanism is provided to process the client signals of high hierarchy and access the signals to a byte synchronization transfer network. Transparent Generic Framing Procedure (GFP-T) is a standard special for encapsulating data streams, which is disclosed in ITU-T Rec. G.7041 GFP, in which it is regulated that the client signal of 8B/10B be encoded at 64B/65B and then be mapped to a GFP format with a fixed length before being sent out. So, unlike packet encapsulation, by utilizing data-stream encapsulation the encapsulated data can be transferred immediately before finishing receiving one frame signal. Accordingly, low delay transfers can be realized. Some protocols, such as fibre channel protocol, Enterprise Systems Connection (ESCON) Protocol, Fibre Connection (FICON), Gigabit Ethernet (GE), etc, can be used for transparent encapsulation.

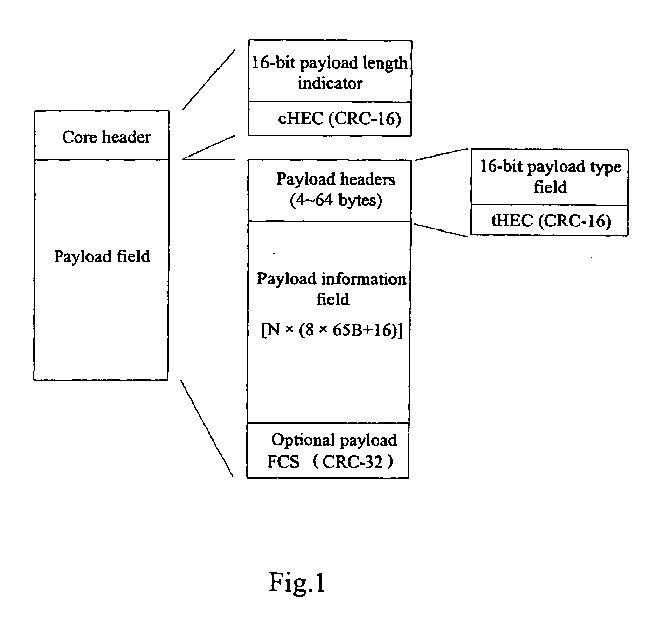

Figure 1 is a schematic diagram showing an encapsulation structure of GFP-T. Generally speaking, a GFP-T frame is comprised of two parts, namely frame header and payload field. Specially, as for a GFP-T frame, the frame header is also called core header. Core header is comprised of length indicator and Core Header Error Check (cHEC), in which cHEC is a 16-bit Cyclic Redundancy Code (CRC). Payload field is comprised of payload headers having 4∼64 bytes, payload information field and payload FCS, in which payload FCS is a 32-bit CRC and optional in GFP-T frame structure. Payload headers are comprised of 16-bit payload type field and Type Header Error Check (tHEC), in which tHEC is a 16-bit CRC. An idle GFP frame only includes core header.

When the GFP-T encapsulation mode is applied to encapsulate 8B/10B service, block decoding is required. If 8B/10B code is a data character, the received 10-bit character is decoded to 8-bit original data. If 8B/10B code is a control character, the received 10-bit character is decoded to control code. Then 64B/65B encoding is implemented for the decoded signal, specifically speaking, in terms of the data character, the 8-bit original data is directly encapsulated to the 65B encoding block, and then the 65B encoding block is placed into payload field of GFP; in terms of the control character, firstly the control code is encoded to a 4-bit control code, then this 4-bit control code is encapsulated to the 65B encoding block, and then the 65B encoding block is placed into payload field of GFP. After every character of the client signal has been decoded, the decoded codes are encapsulated to the GFP with a fixed length in terms of data character or control character. Compared with packet encapsulation mode, by applying GFP-T encapsulation mode there is no need to buffer the whole frame, so the real-time ability of transfers is improved.

Generally speaking, bandwidth convergence is not provided in data stream encapsulation service, so it is required that the mapping bandwidth be larger than the basic data rate of client data before being encoded, namely the mapping bandwidth be larger than the original bandwidth. In this way, since the rate of storing the data stream in the First In First Out (FIFO) buffer is less than that of reading out the data stream, there may be vacancy in the data stream. Under such a condition, to guarantee the transferring continuity, when there is no data for mapping transfer in FIFO, if the frame trailer of GFP is being transferred, idle frames are inserted between frames; if the GFP frame is being transferred, fill characters are inserted in the encapsulated GFP frames. The mapping mode of fill characters is the same as that of the control characters. The decapsulation module of GFP realizes the recognition and discard of fill characters. In the prior art, Pat. US 2003/0026267 discloses a method of Virtual Channels in a Network Switch, in which a data buffering mechanism is described.

According to the description above, one advantage of GFP-T is that the control character of 8B/10B service is reserved, so the encapsulating object of GFP-T must be 8B/10B service accordingly, and GFP-T can not be used for encapsulating discretional service other than the 8B/10B service, which limits the application of GFP-T. At the same time, since the characters must be distinguished as data characters or control characters, this encapsulate process is pretty complicated.

With the development of technology, more and more types of services need to be supported on a multi-service transfer platform. The problem to be resolved is how to encapsulate data streams for discretional service and guarantee the complete transparent transmission of data contents.

### Summary of the Invention

Therefore, a main object of the present invention is to provide a method for encapsulating data stream so as to implement transparent transfer for various kinds of services.

To achieve the above-mentioned object, the specific technical scheme of this invention is as follows.

A method for encapsulating data streams for various kinds of services to guarantee a transparent transmission of data content, comprising:
a. defining a threshold in a buffer;
b. judging whether the amount of bits stored in the buffer reaches the threshold; and if it is judged that the amount of bits reaches the threshold, encapsulating the bits into a segment with a predefined length, wherein the predefined length is smaller than the threshold of the buffer, and adding a header for the segment.

Preferred features of the invention are set out in the appended claims.

When applying the present invention, the data stream encapsulation is implemented by performing counter slicing for the received data stream and adding header as well as trailer. Because there is no need to perform any recognition process for the received service when applying the method according to this present invention, the present method has nothing to do with the specific service, encapsulation process for discretional service of data stream and transparent transfer afterwards can be implemented. Furthermore, in the present invention there is no need to distinguish data character from control character, resulting in more simple and effective processing procedure. Meanwhile, since the present invention is just a method for encapsulation, the encapsulated data can be transferred with any transfer method regulated in the present standard protocols, the present invention is provided with very good compatibility with the present standard protocols.

### Brief Description of the Drawings

Figure 1 is a schematic diagram showing the encapsulation structure of GFP-T.
Figure 2 is a schematic diagram of data stream encapsulation at the service-receiving terminal according to the invention.
Figure 3 is a schematic diagram of data stream decapsulation at the service-sending terminal according to the invention.

### Detailed Description of the Invention

Now, the present invention will be described in detail hereinafter with reference to the accompanying drawings and a specific embodiment.

The idea of the present invention is that no recognition processing is implemented for the received service and only correctness of the transferred data stream needs to be guaranteed.

The encapsulation method according to the present invention will be described in detail taking the GFP-T encapsulation mode as an example.

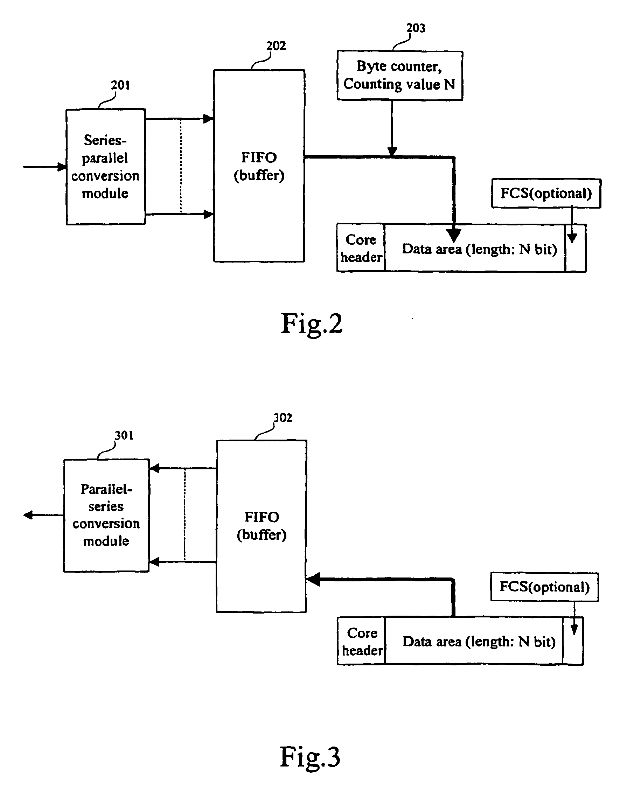

Figure 2 is a schematic diagram of data stream encapsulation at the service-receiving terminal according to the invention. After the serial electric signal at the service-receiving terminal is converted from serial signal to parallel signal through a series-parallel conversion module 201, the signal is sent into a FIFO buffer 202 for the process of encapsulation module. A byte counter 203 is preset, and the counting value N is the length of data area of the encapsulated frame. The value of counting value N is set according to the relation between effectiveness and cost in practical transfers, thus the counting value N is different for different services, but it keeps constant in the same service-transferring course.

Because rate adaptation between packets is not supported by GFP-T encapsulation mode, to guarantee the continuity of the transferred data between packets, control through buffer is necessary, and it is required that the mapping bandwidth be larger than the basic data rate of client data before being encoded. A low threshold value is set in the FIFO buffer 202, after the stored data in FIFO reaches the low threshold value, in terms of the first-in-first-out principle, the data in FIFO buffer is sliced according to the current counting value N in order to guarantee the continuity of data between frames. The sliced data is added with a core header and a payload field header, thereby encapsulation for the data can be implemented. The data without being sliced in the buffer will be combined and processed in the next slicing course.

When setting the counting value N, if N is excessively large, meaning that the slice length is too long and the depth of FIFO buffer is too large, the low-delay advantage of data stream encapsulation may be lost; if counting value N is excessively small, meaning that slice length is too short, the effective bandwidth may be decreased due to the existence of frame header and frame trailer. Therefore, in practical application, N is set according to the best transfer efficiency.

Figure 3 is a schematic diagram of data stream decapsulation at the service-sending terminal according to the invention. As for GFP protocol, after the sending terminal receives the data frames from the outlying terminal, the start of data area is bounded through core header, the end of the frame is bounded according to the data length N, then core header and payload header is removed, the received data is sent to the FIFO buffer 302. Since the idle frame data has already been recognized and discarded before being stored in buffer 302, the data stored in buffer 302 is pure payload data. The data stream, in terms of FIFO principle, is converted from parallel data to series data through parallel-series conversion module 301 and then sent out.

The above description illustrates the encapsulation and decapsulation process in terms of GFP protocol. Since there is no frame trailer in the encapsulated frame in terms of GFP protocol, the process just needs to add core header and payload field header during encapsulation process and to remove core header and payload field header during decapsulation process. As for other protocols, such as LAPS protocol, the encapsulated frame must have frame trailer, so the process of encapsulation not only needs to add frame header and payload field header but also to add frame trailer; meanwhile the process of decapsulation not only needs to remove frame header and payload field header but also frame trailer. Usually the frame trailer is a Frame Checking Sequence (FCS) field. On the condition that the frame trailer exists, after the sending terminal receives the data frames from the outlying terminal, the start of data area can be bounded according to frame header, the end of data area can be bounded according to frame trailer, then frame header, payload field header and frame trailer will be removed, the data after this processing will be sent to the FIFO buffer 302.

An encapsulation scheme is provided in the present invention, so the method regulated in the prior standard encapsulation protocols, such as GFP, LAPS Protocol, may be used to perform data transmission. For instance, through defining speed adaptation during mapping process for idle packets, utilizing the reserved bit of frame header information to transfer the self-defined far terminal performance and alarm messages, such as fibre state at the service access terminal, some relevant protection operations can be realized.

While the invention has been shown and described with reference to a preferred embodiment thereof, it will be understood by those skilled in the art that various changes in form and details may be made therein without departing from the scope of the invention as defined by the appended claims.

## Claims

1. A method for encapsulating service bit streams for various kinds of services to guarantee a transparent transmission of data content, the method comprises:
a. defining a threshold in a buffer;
b. judging whether the amount of bits stored in the buffer reaches the threshold; and if it is judged that the amount of bits reaches the threshold, encapsulating the bits into a segment with a predefined length, wherein the predefined length is smaller than the threshold of the buffer, and adding a header for the segment.

2. A method according to claim 1, further comprising: presetting a byte counter of which the counting value equals to the predefined length; wherein, said step of encapsulating the bits into the segment with the predefined length which is smaller than the threshold is performed according to the counting value of the byte counter.

3. A method according to claim 1, further comprising the step of performing series-parallel conversion for the bits before the bits is stored in the buffer.

4. A method according to claim 3, further comprising the step of decapsulating the service bit streams, and further comprising the step of performing parallel-series conversion for the decapsulated segment.

5. A method according to claim 1, further comprising the step of decapsulating the service bit streams which comprises: bounding the start of bit area according to the header, bounding the end of segment according to the predefined length, and then removing the header.

6. A method according to claim 1, further comprising: adding a payload field header for the segment.

7. A method according to claim 6, further comprising the step of decapsulating the service bit streams which comprises: bounding the start of bit area according to the header, bounding the end of segment according to the predefined length, and then removing the header and the payload field header.

8. A method according to claim 6, further comprising the step of adding a frame trailer for the data segment, and further comprising the step of decapsulating the data streams which comprises: bounding the start of data area according to the frame header, bounding the end of frame according to the predefined length, and then removing the frame header, the payload field header and the frame trailer.

9. A method according to claim 6, further comprising the step of adding a frame trailer for the data segment, and further comprising the step of decapsulating the data streams which comprises: bounding the start of data area according to the frame header, bounding the end of frame according to the frame trailer, and then removing the frame header, the payload field header and the frame trailer.

10. A method according to claim 1, wherein the buffer is a first-in-first-out (FIFO) buffer.

## Patentansprüche

1. Verfahren zum Einkapseln von Dienstbitströmen für verschiedene Arten von Diensten, um eine transparente Übertragung von Dateninhalt zu gewährleisten, wobei das Verfahren umfasst:
a. Definieren eines Schwellwerts in einem Zwischenspeicher;
b. Entscheiden, ob die im Zwischenspeicher gespeicherte Bitmenge den Schwellwert erreicht; und wenn entschieden wird, dass die Bitmenge den Schwellwert erreicht, Einkapseln der Bits in ein Segment mit einer vordefinierten Länge, wobei die vordefinierte Länge kleiner als der Schwellwert des Zwischenspeichers ist, und Hinzufügen eines Headers für das Segment.

2. Verfahren nach Anspruch 1, ferner umfassend: Voreinstellen eines Bytezählers, dessen Zählwert gleich der vordefinierten Länge ist, wobei der Schritt des Einkapselns der Bits in das Segment mit der vordefinierten Länge, die kleiner als der Schwellwert ist, gemäß dem Zählwert des Bytezählers durchgeführt wird.

3. Verfahren nach Anspruch 1, ferner den folgenden Schritt umfassend: Durchführen einer Serien-Parallel-Umsetzung für die Bits, bevor die Bits im Zwischenspeicher gespeichert werden.

4. Verfahren nach Anspruch 3, ferner den folgenden Schritt umfassend: Entkapseln der Dienstbitströme, und ferner den folgenden Schritt umfassend: Durchführen einer Parallel-Serien-Umsetzung für das entkapselte Segment.

5. Verfahren nach Anspruch 1, ferner den folgenden Schritt umfassend: Entkapseln der Dienstbitströme, was Folgendes umfasst: Begrenzen des Bitbereichsanfangs gemäß dem Header, Begrenzen des Segmentendes gemäß der vordefinierten Länge und anschließendes Entfernen des Headers.

6. Verfahren nach Anspruch 1, ferner umfassend: Hinzufügen eines Nutzinformationsfeld-Headers für das Segment.

7. Verfahren nach Anspruch 6, ferner den folgenden Schritt umfassend: Entkapseln der Dienstbitströme, was Folgendes umfasst: Begrenzen des Bitbereichsanfangs gemäß dem Header, Begrenzen des Segmentendes gemäß der vordefinierten Länge und anschließendes Entfernen des Headers und des Nutzinformationsfeld-Headers.

8. Verfahren nach Anspruch 6, ferner den folgenden Schritt umfassend: Hinzufügen eines Rahmen-Trailers für das Datensegment, und ferner den folgenden Schritt umfassend: Entkapseln der Datenströme, was Folgendes umfasst: Begrenzen des Datenbereichsanfangs gemäß dem Rahmen-Header, Begrenzen des Rahmenendes gemäß der vordefinierten Länge und anschließende Entfernen des Rahmen-Headers, des Nutzinformationsfeld-Headers und des Rahmen-Trailers.

9. Verfahren nach Anspruch 6, ferner den folgenden Schritt umfassend: Hinzufügen eines Rahmen-Trailers für das Datensegment, und ferner den folgenden Schritt umfassend: Entkapseln der Datenströme, was Folgendes umfasst: Begrenzen des Datenbereichsanfangs gemäß dem Rahmen-Header, Begrenzen des Rahmenendes gemäß dem Rahmen-Trailer und anschließende Entfernen des Rahmen-Headers, des Nutzinformationsfeld-Headers und des Rahmen-Trailers.

10. Verfahren nach Anspruch 1, wobei der Zwischenspeicher ein Durchlauf-(FIFO) Zwischenspeicher ist.

## Revendications

1. Procédé pour encapsuler des flots de bits de service pour divers types de services afin de garantir une transmission transparente de contenus de données, le procédé consistant à :
a. définir un seuil dans une mémoire tampon ;
b. juger si la quantité de bits mémorisés dans la mémoire tampon atteint le seuil ; et s'il est jugé que la quantité de bits atteint le seuil, encapsuler les bits dans un segment d'une longueur prédéfinie, dans lequel la longueur prédéfinie est inférieure au seuil de la mémoire tampon, et ajouter un en-tête pour le segment.

2. Procédé selon la revendication 1, comprenant en outre : la présélection d'un compteur d'octets dont la valeur de comptage est égale à la longueur prédéfinie ; dans lequel ladite étape consistant à encapsuler les bits dans le segment de la longueur prédéfinie qui est inférieure au seuil est effectuée en fonction de la valeur de comptage du compteur d'octets.

3. Procédé selon la revendication 1, comprenant en outre l'étape consistant à effectuer une conversion série-parallèle pour les bits avant la mémorisation des bits dans la mémoire tampon.

4. Procédé selon la revendication 3, comprenant en outre l'étape consistant à désencapsuler les flots de bits de service, et comprenant en outre l'étape consistant à effectuer une conversion parallèle-série pour le segment désencapsulé.

5. Procédé selon la revendication 1, comprenant en outre l'étape consistant à désencapsuler les flots de bits de service qui comprend : la délimitation du début de la zone de bits conformément à l'en-tête, la délimitation de la fin du segment conformément à la longueur prédéfinie, et ensuite le retrait de l'en-tête.

6. Procédé selon la revendication 1, comprenant en outre l'ajout d'un en-tête de champ de charge utile pour le segment.

7. Procédé selon la revendication 6, comprenant en outre l'étape consistant à désencapsuler les flots de bits de service qui comprend : la délimitation du début de la zone de bits conformément à l'en-tête, la délimitation de la fin du segment conformément à la longueur prédéfinie, et ensuite le retrait de l'en-tête et de l'en-tête de champ de charge utile.

8. Procédé selon la revendication 6, comprenant en outre l'étape consistant à ajouter un champ de fin de trame pour le segment de données, et comprenant en outre l'étape consistant à désencapsuler les flots de données qui comprend : la délimitation du début de la zone de données conformément à l'en-tête de trame, la délimitation de la fin de trame conformément à la longueur prédéfinie, et ensuite le retrait de l'en-tête de trame, de l'en-tête de champ de charge utile et du champ de fin de trame.

9. Procédé selon la revendication 6, comprenant en outre l'étape consistant à ajouter un champ de fin de trame pour le segment de données, et comprenant en outre l'étape consistant à désencapsuler les flots de données qui comprend : la délimitation du début de la zone de données conformément à l'en-tête de trame, la délimitation de la fin de trame conformément au champ de fin de trame, et ensuite le retrait de l'en-tête de trame, de l'en-tête de champ de charge utile et du champ de fin de trame.

10. Procédé selon la revendication 1, dans lequel la mémoire tampon est une mémoire tampon premier entré, premier sorti (FIFO).
